## Europäisches Patentamt
## European Patent Office
## Office européen des brevets

(19)

(11) Publication number: **0 011 361**
**B1**

(12)
# EUROPEAN PATENT SPECIFICATION

(45) Date of publication of patent specification: **25.05.83**

(21) Application number: **79301999.3**

(22) Date of filing: **25.09.79**

(51) Int. Cl.³: **G 05 D 23/02,**
**F 16 K 31/00,**
**G 05 D 23/185**

(54) **Temperature actuated fluid control valve.**

(30) Priority: **26.09.78 US 946081**

(43) Date of publication of application:
**28.05.80 Bulletin 80/11**

(45) Publication of the grant of the patent:
**25.05.83 Bulletin 83/21**

(84) Designated Contracting States:
**AT BE CH DE FR GB IT NL**

(56) References cited:
**DE - A - 2 734 420**
**US - A - 3 135 495**
**US - A - 3 198 298**
**US - A - 3 853 269**
**US - A - 4 065 052**
**US - A - 4 128 203**

(73) Proprietor: **Kysor Industrial Corporation**
**1 Madison Avenue**
**Cadillac Michigan (US)**

(72) Inventor: **Monigold, Larry Edwin**
**5652 East Blossom**
**Cadillac Michigan (US)**

(74) Representative: **Robinson, Anthony John Metcalf**
**et al,**
**30 John Street**
**London, WC1N 2DD (GB)**

Courier Press, Leamington Spa, England.

Temperature actuated fluid control valve

This invention relates to a temperature actuated sequentially functioning fluid control valve comprising a valve housing and a temperature sensitive assembly including an expansion element operable to open or close a first valve assembly in dependence upon the temperature sensed so controlling fluid flow between a first fluid supply port and a first fluid outlet port in the housing.

Such temperature responsive valves are presently used to control fluid flow between a pressure or vacuum source and a fluid actuator, as for control of a vehicle radiator shutter or the like. Valves of this general nature typically have a temperature sensitive element positioned in the engine coolant through a port in the engine, as may be seen e.g. in US Patents 3,853,269 and 3,135,495. The shutter is therefore operated in response to engine temperature for control of the engine temperature, as shown e.g. in US Patent 3,198,298. This reference shows a temperature actuated valve which includes a single plunger and ball valve arrangement and is adapted for use in controlling fluid flow through a single pair of ports.

Some engines also employ a fan to propel air, the fan being controlled by a fan drive clutch which is operated in response to engine temperature conditions. Such a clutch is typically controlled by a second control valve having a second temperature sensitive element also in the engine coolant via a second port in the engine arranged to operate the fan at a higher temperature than that at which the shutter is operated. The shutter regulates the amount of air allowed to flow through the radiator. The fan clutch regulates the amount of air dynamically drawn or blow, i.e. propelled through the radiator.

It is desirable that, these two separately functioning systems should operate co-operatively to create a large range of variable air flow conditions for engine temperature control. However, since the two operate independently, their operation can be mutually conflicting. This possibility of interference can be caused for example by one or both of the units not being accurately preset or not properly located in the engine cooling system or one or both not functioning accurately for some other reason. At best they require the expense of two control valves and two ports in the engine block to the coolant systems.

US Patent No. 4065054 shows a temperature actuated valve having a dual action control mechanism which can operate a fan clutch and a shutter for a vehicle engine. The fan clutch arrangement is activated by a limit switch which in turn controls a solenoid operated valve. This arrangement suffers the disadvantage that it has no "over-travel" feature. Thus if the coolant temperature continues to rise after the shutters have been opened and the fan engaged the moving parts can act as a solid ram against the limit switch. This can result in potential damage to the switch as a whole. Furthermore, if the device should be subject to overheating the limit switch actuation pin employed could well be moved too far and thus become jammed in the switch. When the engine cools, the valve would close the shutters but the fan clutch might remain engaged.

The arrangement shown in US Patent No. 4,065,054 suffers the further drawback that it tends to lack durability, since moisture contained in the compressed air which flows through the valve can easily penetrate into the switch cavity and the switch itself, so causing corrosion and/or electrical short-circuiting.

It is an object of the present invention to provide a temperature actuated sequentially functioning fluid control valve which does not suffer from these disadvantages and drawbacks.

According to the present invention, a temperature actuated sequentially functioning fluid control valve is characterised in that the valve comprises a passage in the valve housing having a first passage portion and a second passage portion; a first plunger and a first ball valve in the first passage portion and a second plunger and second ball valve in the second passage portion; the first ball valve including a first ball and a first seat; the second ball valve including a second ball and a second seat; the first plunger being between the first ball and the actuator and being biased towards the actuator and away from the first ball; the second plunger being between the first ball and the second ball and being biased towards the first ball and away from the second ball thereby normally retaining the first ball on the first seat; means for biassing the second ball onto the second seat; the plungers and balls being aligned with each other and the actuator whereby shifting of the actuator will sequentially result in the first plunger being shifted into engagement with the first ball, the first ball being shifted by the first plunger off the first seat, the first ball then shifting the second plunger into engagement with the second ball, and the second plunger shifting the second ball off the second seat; the first fluid supply port and the first fluid outlet port being communicable through the first plunger and being closed off by engagement of the first plunger with the first ball; the valve further comprising a second fluid supply port and a second fluid outlet port communicable through the second plunger and closed off by engagement of the second plunger with the second ball.

Thus it may be seen that the control valve may regulate two fluid flow systems and hence the two functions, in positive sequential fashion, using the same temperature sensor. The control may be particularly suitable for controlling an automatic radiator shutter and an air operated fan drive clutch of an engine in co-operative fashion. Only one port in the engine block is necessary and the same valve unit sequentially controls the fluid supply to both the shutter and the fluid supply to the clutch. The two functions should not overlap or interfere with each other, rather, their co-operative operation assures a wide range of regulated air flow conditions to optimize engine operating temperature for better fuel economy and longer engine life.

Also, the dual ball valve and plunger of the construction in accordance with the invention includes an inherent "over-travel" feature, making the device less subject to damage on overheating. Furthermore, in the claimed construction, the valve body includes two pairs of fluid supply and outlet supports, the flow through which is directly mechanically controlled by the dual valve arrangement. This direct valving is believed to be more durable and more reliable than the solenoid/electrical switch arrangement employed in prior art devices.

Preferably each plunger has a hollow portion in communication with an open end and each fluid path comprises an inlet port and an outlet port connectible via the hollow portion and the open end of the corresponding plunger.

Preferably the expansion element moves the first plunger into engagement with the first valve member closing the open end of the plunger thereby closing off the first fluid path, and subsequently lifts the first valve member from its seat to connect the first outlet port with the first exhaust port. Preferably, also, movement of the first valve member from its seat moves the second plunger into engagement with the second valve member closing the open end of the second plunger thereby closing off the second fluid path, and subsequently lifts the second valve member from its seat thereby connecting the second outlet port with a second exhaust port.

Biasing means may be provided to retain the first valve member in engagement with its seat, the second valve member retained in engagement with its seat, the first plunger in abutment with the expansion member and the second plunger in abutment with the first valve member.

The invention may be carried into practice in various ways and one embodiment will be described by way of example with reference to the accompanying drawings in which:—

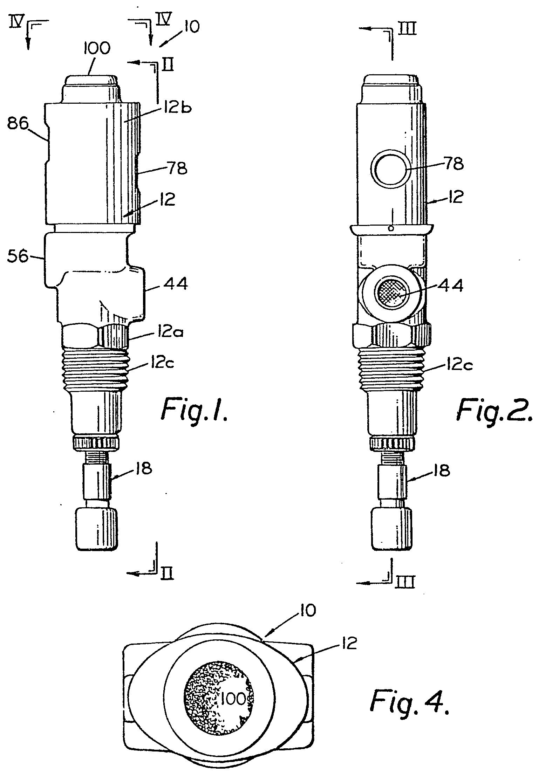

Figure 1 is a side elevation of a control valve in accordance with the invention.

Figure 2 is an elevation of the valve of Figure 1 as seen in the direction indicated by the line II—II in Figure 1.

Figure 3 is a section of the valve of Figure 1 taken along the line III—III of Figure 2; and

Figure 4 is an end view of the valve of Figure 1 as seen in the direction indicated by the line IV—IV of Figure 1.

In this embodiment of the invention the valve is used to control the temperature of an engine in dependence upon the coolant temperature.

The assembly 10 includes an elongate valve housing 12 comprising a pair of interfitting components 12a and 12b interconnected by fasteners 14. Extending the length of this elongate housing is a passage 16 having passage portions 16a and 16b. Threadably connected in one end of this passage and specifically of passage portion 16a is a thermoresponsive subassembly 18 of conventional type. It includes a temperature sensing bulb 18′ which extends into the coolant flow passage of an engine block shown by phantom lines 20 to which the valve is connected by threaded fasteners 12c. Sensor 18′ contains a conventional substance which expands with increasing temperature to extend component 18″ which projects into passage 16. The substance contracts with decreasing temperature to retract component 18″. Engaging the end of movable component 18″ is a first elongate plunger or push rod 22. This plunger, located in passage portion 16a, is biased into engagement with component 18″ by a compression coil spring 24 around the plunger, one end of the spring abutting an annular washer 26 which in turn engages a fixed annular shoulder in the passage, and the other end abutting an annular washer 28 which in turn abuts an annular collar 30 fixed on the movable plunger 22. A bleed port 27 in the housing 12 communicates the area between the washers 26 and 28 to the outside for free air movement therebetween during compression and extension of the spring 24. This biasing spring also biases the plunger 22 away from engagement with the first ball valve element 32 normally retained on a valve seat 34, the valve element and valve seat collectively forming a ball valve. The inner end of the plunger 22, i.e. the end toward the ball valve, is hollow, having an interior passage 22a which has an axial port seat 22b on the end of the plunger toward the ball valve so as to form a valving action with the ball valve element when engaging it. The other end of the plunger passage 22a has a radial port 22c which communicates to the circumferential periphery of the plunger and an annular chamber 38. This chamber is on the inner diameter of an annular sleeve-like spacer 40 which in turn has an annular chamber 42 around its outer periphery. The port 40a connects these chambers. The chamber 42 communicates through the port 44 in the valve housing 12, which is in turn connectible by means of a threaded opening to an air or vacuum source 46 (shown schematically). A screen 48 is located in the port 44. The spacer 40 has a pair of annular seal rings 50 and 52 at its axial ends. Thus, the spring 24, the slide pin 22, and the spacer 40 are all in the passage portion 16a.

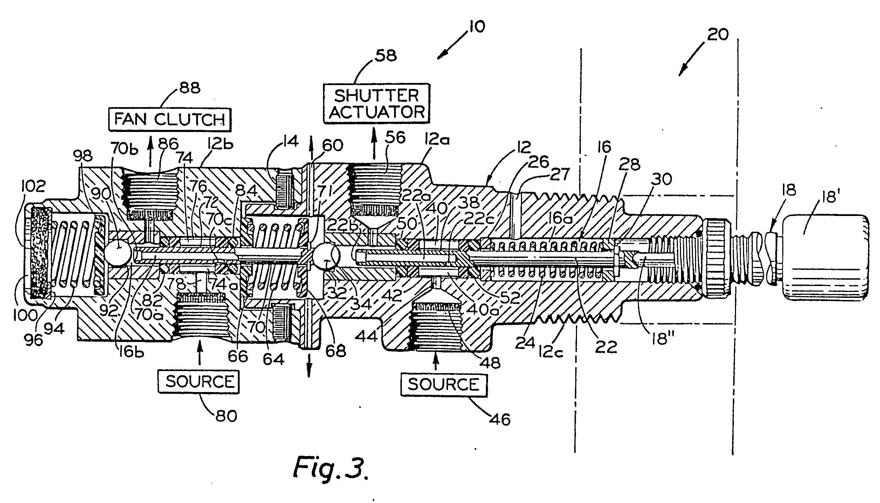

Also communicating with the passage portion 16a is an outlet port 56 which is connectible to and may communicate with a shutter actuator 58 (shown schematically) such as a fluid cylinder. Preferably the radiator shutter, e.g. of the type set forth in US Patent 3,198,298 is spring biased to the open position and fluid actuated to the closed position, the fluid actuator being an air cylinder or the like. When the plunger 22 is in the position depicted in Figure 3, the fluid from the source 46 through the port 44 is in communication with the outlet port 56 to retain the shutter in a closed condition to inhibit cooling air flow through the radiator or the portion thereof that the shutter covers.

On the opposite side of the ball valve element 32 from the plunger 22 is one or more exhaust ports 60 such that, when the ball valve element 32 is off its seat 34, the port 56 will be in communication with these exhaust ports 60 to allow compressed air or the like to escape from the shutter actuator 58 and thereby enable its spring bias control to open the shutter assembly for air flow through the radiator. The valve element 32 is normally biased against its valve seat 34 by a compression spring 64 retained between a pair of cups 66 and 68. The spring is around a second plunger or slide pin 70, with the cup 66 engaging a shoulder of the valve housing portion 12b and the cup 68 being retained by an annular collar 71 around the plunger 70. The inner end of plunger 70 is retained in engagement with the ball 32, this end having a concave configuration to match the ball. Movement of the ball 32 off its seat therefore must be against the force of the biasing spring 64 by axial movement of the plunger 70. These two plungers 70 and 22 straddle the ball valve, with the plunger 70 constantly engaging and normally retaining the ball on its seat, and the plunger 22 capable of shifting the ball off its seat.

The plunger 70 is located in the second portion 16b of passage 16. The end of the plunger 70 opposite the ball 32 is hollow, having a passage 70a open to one axial end where a port seat 70b is located and having a second port 70c at its other end. Port 70c communicates with an annular chamber 72 around the plunger and within an annular collar-shaped spacer 74. The spacer 74 has a radial port 74a that communicates from the inner chamber 72 to an outer chamber 76 around the outer periphery of the spacer 74. Communicant with the chamber 76 is a port 78 in the housing portion 12b which is connectible to a compressed air or vacuum source 80 by means of threaded fasteners or the like. At opposite ends of the spacer 74 is a pair of annular seal rings such as O-rings 82 and 84. Air or vacuum at source 80 is able to communicate through this series of ports and passages to an outlet port 86 in the housing portion 12b which is in communication with a fan clutch 88 preferably spring biased to the fan drive condition and shifted to the non drive condition by fluid through this control valve.

Adjacent the axial end port 70b in the plunger 70 is a second ball valve including a ball valve element 90 and its valve seat 92 against which the ball valve element is normally retained by a compression coil spring 94. This spring is retained between a fixed retainer 96 helf by the housing, and a cup 98 that engages the ball 90. The ball 90 has the passage portion 16b on the inner face thereof, and exhaust ports 100 preferably including a filter element 102 on the outer face of the ball.

When the engine coolant is increasing in temperature this control valve activates the shutter system for increasing air flow through the radiator and, then sequentially, as necessary, activates the fan clutch for increasing the air propelled through the radiator by the fan system. The combination thereby enables a wide range of air flow conditions to be achieved for optimum control of the engine temperature. When the engine coolant temperature is decreasing, the control valve first deactivates the fan drive and then, as necessary, closes the shutter system to prevent the engine temperature from being lowered too far. This is described in detail below.

When in the position depicted in Figure 3, pressurised air from source 46 communicates through the port 44 of the housing, chamber 42, port 40a, chamber 38, port 22c, passage 22a, port 22b, and discharge port 56 to maintain the shutter actuator 58 shifted against its spring bias to hold the shutter in its closed position, thereby minimizing air flow through the radiator of the vehicle. Also, the pressurised air in the source 80 is communicant with port 78, chamber 76, port 74a, chamber 72, port 70c, passage 70a, port 70b and hence with the discharge port 86 to the fan clutch 88 to retain the fan in its non-driving condition. Thus, the engine is allowed to increase in temperature with minimum air coolant flow. As the engine coolant temperature thus increases, the contents of the thermoresponsive subassembly 18 expands, thereby extending expansion element 18" to shift the plunger 22 gradually against the bias of the coil spring 24.

With sufficient temperature increase to shift the plunger 22 into engagement with the ball valve element 32, the communication from the source 46 to the shutter actuator 58 is closed off. Further movement of the plunger 22 shifts the ball 32 off its valve seat 34 to allow any pressurised air at the shutter actuator 58 to flow out via the exhaust ports 60. But the continued closure of the port 22b prevents exhausting of the source 46 to the exhaust port 60. This allows the biasing mechanism of the shutter system to open the shutters for flow of · cooling air through the radiator. The amount that the ball 32 is shifted from its seat will determine the rapidity of the exhaust of the air from the shutter actuator and therefore the rate of opening of the shutter system. If the engine coolant temperature continues to rise, the thermoresponsive subassembly 18 will further shift the plunger 22, which will shift the valve 32 further, which in turn shifts the second plunger 70 against its biasing spring 64 so that ultimately the port 70b of the plunger 70 will be closed by the ball 90 when the plunger 70 engages this ball valve element. Such engagement will stop communication between the pressurised air source 80 and the fan clutch 88. Further shifting of the two slide pins and the straddled ball 32 will shift the ball valve element 90 off its seat 92 to allow pressurised air at the fan clutch 88 to flow back through the port 86, and passage 16b and escape out of the exhaust port 100. But continued closure of the port 70b by the ball 90 prevents exhausting of the source 80 out through the port 100. Thus, the spring bias of the fan clutch will drive the fan to propel a greater amount of air through the radiator. If, as a result, the temperature of the engine coolant lowers, this entire mechanism will operate sequentially in reverse, with the ball valve element 90 first engaging its seat, the plunger 70 retracting away from the ball valve to again cause communication between the source 80 and the fan clutch 88, the ball 32 then engaging its seat, and the plunger 22 retracting from the ball 32 to re-establish communication between the source 46 and the shutter actuator 58. This sequential action in one direction or another is constantly controlled for maximum co-operative effect without interference between the two functions.

Conceivably the two sources 46 and 80 could be vacuum sources with any actual air flow occurring in the opposite direction from that which would exist if such are pressurised air sources, as would be evident to persons skilled in this field.

It is also conceivable that the control valve could be employed in other environments than for controlling engine temperature (i.e. fan drive/air whistle alarm; shutter/fan drive override for automatic transmission; etc.).

**Claims**

1. A temperature actuated sequentially functioning fluid control valve (10) comprising a valve housing (12) and a temperature sensitive assembly (18) including an expansion element (18″) operable to open or close a first valve assembly in dependence upon the temperature sensed so controlling fluid flow between a first fluid supply port (44) and a first fluid outlet port (56) in the housing characterised in that the valve comprises a passage in the valve housing having a first passage portion (16a) and a second passage portion (16b); a first plunger (22) and a first ball valve in the first passage portion and a second plunger (70) and second ball valve in the second passage portion; the first ball valve including a first ball (32) and a first seat (34); the second ball valve including a second ball (90) and a second seat (92); the first plunger being between the first ball and the actuator and being biased towards the actuator and away from the first ball; the second plunger being between the first ball and the second ball and being biased towards the first ball and away from the second ball therby normally retaining the first ball on the first seat; means (64) for biasing the second ball onto the second seat; the plungers and balls being aligned with each other and the actuator whereby shifting of the actuator will sequentially result in the first plunger being shifted into engagement with the first ball, the first ball being shifted by the first plunger off the first seat, the first ball then shifting the second plunger into engagement with the second ball, and the second plunger shifting the second ball off the second seat; the first fluid supply port and the first fluid outlet port being communicable through the first plunger and being closed off by engagement of the first plunger with the first ball; the valve further comprising a second fluid supply port (76) and a second fluid outlet port (86) communicable through the second plunger and closed off by engagement of the second plunger with the second ball.

2. A valve as claimed in Claim 1 in which the housing includes a first exhaust port (60) communicable with the first outlet port when the first ball is off the first seat; and a second exhaust port (100) communicable with the second outlet port when the second ball is off the second seat.

3. A valve as claimed in Claim 2 characterised in that each plunger has a hollow portion (22a, 70a) in communication with an open end (22b, 70b) and in that the first and second inlet ports (44, 78) and the first and second outlet ports (56, 86) are connectible via the hollow portion and open end of the corresponding plunger to define first and second fluid paths.

4. A valve as claimed in Claim 3 characterised in that the expansion element (18″), in moving the first plunger (22) into engagement with the first valve member (32), closes the open end (22b) of the first plunger (22), thereby closing off the first fluid path.

5. A valve as claimed in Claim 4 characterised in that movement of the first valve member (32) from the first valve seat (34) moves the second plunger (72) into engagement with the second valve member (90) to close the open end (70b) of the second plunger (72), thereby closing off the second fluid path.

6. A valve as claimed in Claim 5 characterised in that the second valve member (90) is retained in engagement with the second valve seat (92) by second biasing means (94).

7. A valve as claimed in Claim 6 characterised in that the first plunger (22) is retained in abutment with the expansion member (18″) by third biasing means (24) and in that the second plunger (72) is retained in abutment with the first valve member (32) by the second biasing means (64).

8. In an engine having a radiator, a temperature actuated fluid control valve (10) for controlling the cooling of the engine characterised in that the valve comprises a valve as claimed in any one of Claims 1 to 7 and in that the first fluid path is arranged to control a shutter (58) for regulating the flow of air through the engine radiator and the second fluid path is arranged to control a fan (88) for propelling air through the radiator.

### Patentansprüche

1. Temperaturabhängiges fluidisches Steuerventil (10) mit aufeinanderfolgenden Funktionsabläufen mit einem Ventilgehäuse (12) und einer temperaturempfindlichen Anordnung (18), welche ein Expansionselement (18″), mit dessen Hilfe eine erste Ventilanordnung in Abhängigkeit von der aufgenommenen Temperatur geöffnet oder geschlossen und auf diese Weise ein Fluidstrom zwischen einer ersten Fluidzufuhröffnung (44) und einer ersten Fluidabgabeöffnung (56) im Gehäuse gesteuert wird, dadurch gekennzeichnet, daß das Ventil aufweist: einen Durchgang im Ventilgehäuse mit einem ersten Durchgangsteil (16a) und einem zweiten Durchgangsteil (16b); einem ersten Stößel (22) und ein erstes Kugelventil im ersten Durchgangsteil und einen zweiten Stößel (70) und ein zweites Kugelventil im zweiten Durchgangsteil, wobei das erste Kugelventil eine erste Kugel (32) und einen ersten Sitz (34) und das zweite Kugelventil eine zweite Kugel (90) und einen zweiten Sitz (92) besitzt, der erste Stößel sich zwischen der ersten Kugel und dem Betätigungsglied befindet und in Richtung auf das Betätigungsglied hin und von der Kugel weg vorgespannt ist und der zweite Stößel sich zwischen der ersten Kugel und der zweiten Kugel befindet und gegen die erste Kugel hin und von der zweiten Kugel weg vorgespannt ist, wodurch die erste Kugel im Normalzustand im ersten Sitz festgehalten ist; Mittel (64) zum Vorspannen der zweiten Kugel gegen den zweiten Sitz, wobei die Stößel und die Kugeln miteinander und mit dem Betätigungsglied in einer Geraden ausgerichtet sind, wodurch eine Verschiebung des Betätigungsgliedes eine Verschiebung des ersten Stößels bis zur Anlage an der ersten Kugel und das Abheben mittels des ersten Stößels dieser Kugel vom ersten Sitz zur Folge hat, worauf anschließend die erste Kugel den zweiten Stößel bis zur Anlage an der zweiten Kugel verschiebt und der zweite Stößel die zweite Kugel vom zweiten Sitz abhebt; wobei die erste Fluidzuführöffnung und die erste Fluidabgabeöffnung durch den ersten Stößel hindruch verbindbar sind und bei Anliegen des ersten Stößels an der ersten Kugel voneinander getrennt sind; welches Ventil ferner eine zweite Fluidzufuhröffnung (76) und eine zweite Fluidabgabeöffnung (86) aufweist, welche durch den zweiten Stößel hindurch verbindbar und bei Anliegen des zweiten Stößels an der zweiten Kugel voneinander getrennt sind.

2. Ventil nach Anspruch 1, dadurch gekennzeichnet, daß das Gehäuse eine erste Ausströmöffnung (60), die mit der ersten Fluidabgabeöffnung in Verbindung steht, wenn die erste Kugel vom ersten Sitz abgehoben ist, und eine zweite Ausströmöffnung (100), die mit der zweiten Fluidabgabeöffnung in Verbindung steht, wenn die zweite Kugel vom zweiten Sitz abgehoben ist, aufweist.

3. Ventil nach Anspruch 2, dadurch gekennzeichnet, daß jeder Stößel einen mit einem offenen Ende (22b, 70b) in Verbindung stehenden hohlen Abschnitt (22a, 70a) besitzt und daß die ersten und zweiten Fluidzuführöffnungen (44, 78) mit den ersten und zweiten Fluidabgabeöffnungen (56, 86) über die hohlen Abschnitte und die offenen Enden der zugehörigen Stößel verbindbar sind, wodurch erste und zweite Fluidströmungswege definiert sind.

4. Ventil nach Anspruch 3, dadurch gekennzeichnet, daß das Expansionselement (18″) mittels einer Bewegung des ersten Stößels (22) in die Anliegstellung an dem ersten Ventilelement (32) das offene Ende (22b) des ersten Stößels (22) verschließt und dadurch den ersten Fluidströmungsweg absperrt.

5. Ventil nach Anspruch 4, dadurch gekennzeichnet, daß die Bewegung des ersten Ventilelementes (32) vom ersten Ventilsitz (34) weg den zweiten Stößel (72) in Anliegstellung an dem zweiten Ventilelement (90) verschiebt, wodurch das offene Ende (70b) des zweiten Stößels (72) verschlossen und der zweite Fluidströmungsweg abgesperrt wird.

6. Ventil nach Anspruch 5, dadurch gekennzeichnet, daß das zweite Ventilglied (90) mittels einer zweiten Vorspanneinrichtung (94) in Anlage am zweiten Ventilsitz (92) gehalten wird.

7. Ventil nach Anspruch 6, dadurch gekennzeichnet, daß der erste Stößel (22) mittels einer dritten Vorspanneinrichtung (24) in Anlage an dem Expansionsglied (18″) und der zweite Stößel (72) mittels der zweiten Vorspanneinrichtung (64) in Anlage an dem ersten Ventilglied (32) gehalten wird.

8. Verbrennungskraftmaschine mit einem Kühler und einem temperaturabhängigen fluidischen Steuerventil (10) zur Steuerung der Kühlung der Maschine, dadurch gekennzeichnet, daß das Steuerventil ein nach einem der Ansprüche 1—7 ausgebildetes Ventil ist und der erste Fluidströmungsweg zur Steuerung eines Verschlusses, der den Luftstrom durch den Kühler reguliert und der zweite Fluidströmungsweg zur Steuerung eines Gebläses (88), welches Luft durch den Kühler treibt, dient.

### Revendications

1. Valve de commande pour fluides (10) fonctionnant séquentiellement et actionnée par des variations de température, comprenant un corps de valve (12) et un dispositif sensible à la température (18) comprenant un élément de dilatation (18″) propre à ouvrir ou à fermer une première valve en fonction de la température détectée de manière à régler le débit d'un fluide entre une première lumière d'alimentation de fluide 44 et une première lumière de sortie de fluide (56) dans le corps, caractérisée en ce qu'elle comprend un passage dans le corps comportant une première partie (16a) et une seconde partie (16b); un premier plongeur (22) et un premier clapet sphérique dans la première partie du passage ainsi qu'un second plongeur (70) et un second clapet sphérique dans la seconde partie du passage; le premier clapet sphérique comprenant une première bille (32) et un premier siège (34); le second clapet sphérique comprenant une seconde bille (90) et un second siège (92); le premier plongeur étant placé entre la première bille et le dispositif d'actionnement et étant rappelé élastiquement vers le dispositif d'actionnement dans un sens s'écartant de la première bille, le second plongeur étant placé entre la première bille et la seconde et étant rappelé élastiquement vers la première bille et dans un sens s'écartant de la seconde bille de manière à retenir normalement la première bille sur le premier siège; un dispositif (64) pour rappeler élastiquement le seconde bille sur le second siège; les plongeurs et les billes étant en ligne les uns avec les autres et avec le dispositif d'actionnement de sorte que le déplacement du dispositif d'actionnement a pour effet, dans l'ordre, de déplacer le premier plongeur en contact avec la première bille, la première bille étant écartée de son siège par le premier plongeur, cette première bille amenant ensuite le second plongeur en contact avec la seconde bille et le second plongeur écartant la seconde bille du second siège; la première lumière d'alimentation de fluide et la première lumière de sortie de fluide pouvant communiquer par l'intermédiaire du premier plongeur et étant isolées par le contact du premier plongeur avec la première bille; la valve comprenant, en outre, une seconde lumière d'alimentation de fluide (76) et une seconde lumière de sortie de fluide (86) pouvant être mises en communication par l'intermédiaire du second plongeur et pouvant être isolées par le contact du second plongeur avec la seconde bille.

2. Valve suivant la revendication 1, caractérisée en ce que le corps comprend une première lumière d'échappement (60) pouvant communiquer avec la première lumière de sortie lorsque la première bille est dégagée du premier siège; et une seconde lumière d'échappement (100) pouvant être mise en communication avec la seconde lumière de sortie lorsque la seconde bille est dégagée du second siège.

3. Valve suivant la revendication 2, caractérisée en ce que chaque plongeur comporte une partie creuse (22a, 70a) communiquant avec une extrémité ouverte (22b, 70b) et la première et la seconde lumière d'entrée (44, 78) ainsi que la première et la seconde lumière de sortie (56, 86) peuvent être raccordées par l'intermédiaire de la partie creuse et de l'extrémité ouverte du plongeur correspondant pour délimiter un premier et un second trajet pour le fluide.

4. Valve suivant la revendication 3, caractérisée en ce que l'élément de dilatation (18″), en amenant le premier plongeur (22) en contact avec la première bille obturatrice (32), ferme l'extrémité ouverte (22b) du premier plongeur (22), coupant ainsi le premier trajet de fluide.

5. Valve suivant la revendication 4, caractérisée en ce que le déplacement de la première bille obturatrice (32) à partir du premier siège de valve (34) amène le second plongeur (72) en contact avec la seconde bille obturatrice (90) pour fermer l'extrémité ouverte (70b) du second plongeur (72) et couper ainsi le second trajet de fluide.

6. Valve suivant la revendication 5, caractérisée en ce que la seconde bille obturatrice (90) est retenue en contact avec le second siège de valve (92) par un second moyen de rappel élastique (94).

7. Valve suivant la revendication 6, caractérisée en ce que le premier plongeur (22) est retenu en contact avec l'élément de dilatation (18″) par un troisième moyen de rappel élastique (24) et le second plongeur (72) est retenu en contact avec le premier obturateur (32) par le second moyen de rappel élastique (64).

8. Dans un moteur comportant un radiateur, une valve de commande pour fluides (10) actionnée par des variations de température pour régir le refroidissement du moteur, caractérisée en ce qu'elle comprend une valve suivant l'une quelconque des revendications 1 à 7, et le premier trajet de fluide est destiné à commander un volet (58) pour régler le débit de l'air traversant le radiateur du moteur, tandis que le second trajet de fluide est destiné à commander un ventilateur (88) destiné à propulser de l'air à travers le radiateur.

Fig.1.

Fig.2.

Fig. 4.

Fig.3.